Europäisches Patentamt

European Patent Office

Office européen des brevets

(19)

(11) Veröffentlichungsnummer: **0 000 699**
**B1**

(12) EUROPÄISCHE PATENTSCHRIFT

(45) Veröffentlichungstag der Patentschrift:
12.08.81

(51) Int. Cl.³: **C 08 F 8/28,** C 08 F 116/38

(21) Anmeldenummer: 78100324.9

(22) Anmeldetag: 07.07.78

(54) Verfahren zur Herstellung von Polyvinylbutyral mit verbesserten Eigenschaften.

(30) Priorität: 20.07.77 DE 2732717

(43) Veröffentlichungstag der Anmeldung:
21.02.79 Patentblatt 79/4

(45) Bekanntmachung des Hinweises auf die Patenterteilung:
12.08.81 Patentblatt 81/32

(84) Benannte Vertragsstaaten:
BE CH DE FR GB NL SE

(56) Entgegenhaltungen:
DE-A-1 545 141
GB-A-873 263

(73) Patentinhaber: HOECHST AKTIENGESELLSCHAFT,
Postfach 80 03 20, D-6230 Frankfurt/Main 80 (DE)

(72) Erfinder: Hermann, Hans Dieter, Dr., Am Dachsbau 7,
D-6232 Bad Soden am Taunus (DE)
Erfinder: Ebigt, Joachim, Dr., Frauenlobstrasse 76a,
D-6000 Frunkfurt/Main (DE)
Erfinder: Hutten, Ulrich Martin, Dr.,
Philipp-Kremer-Strasse 17, D-6233 Kelkheim (Taunus)
(DE)

## Verfahren zur Herstellung von Polyvinylbutyral mit verbesserten Eigenschaften

Es ist bekannt, Polyvinylbutyral durch Acetalisierung von Polyvinylalkohol mit n-Butyraldehyd herzustellen. Nach einem der technisch gebräuchlichen Verfahren wird Polyvinylalkohol in einem organischen Lösungsmittel, beispielsweise Äthanol, dispergiert und in Gegenwart von Säure mit Butyraldehyd umgesetzt. Es resultiert eine Lösung von hochwertigem Polyvinylbutyral. Nachteile dieses Verfahrens sind die aufwendige Isolierung des Polymeren aus der Lösung und die Rückgewinnung des Lösungsmittels.

Es hat daher nicht an Versuchen gefehlt, Polyvinylalkohol in wäßriger Lösung zu Polyvinylbutyral umzusetzen, wobei das Polymere aus der Lösung ausfällt und durch Filtrieren abgetrennt werden kann. Die Schwierigkeiten dieses Verfahrens liegen in der Herstellung eines gut filtrierbaren Polymerkorns mit hoher Einheitlichkeit. Bekannt ist beispielsweise, wäßrige Polyvinylalkohollösung bei 50 bis 100° C mit Butyraldehyd in Gegenwart von Säure umzusetzen, wobei man nach dem Ingangsetzen der Reaktion 0,04 bis 0,2% Emulgator zugibt (vgl. deutsche Patentschrift 1 247 663). Trotz Anwendung intensiver mechanischer Bewegung des Reaktionsgemisches ist das Polymere verhältnismäßig grobkörnig und uneinheitlich, so daß die folgende Verarbeitung, beispielsweise in Gegenwart von Weichmachern zu Folien, Schwierigkeiten bereitet.

Ferner ist bekannt, die Acetalisierung bei Temperaturen unter 20° C zu beginnen (vgl. deutsche Patentschrift 904 592). Dabei fällt nach einiger Zeit das Polymere feinteilig aus. Im weiteren Verlauf kann die Reaktion durch Temperaturerhöhung beschleunigt werden, ohne daß sich dabei die gute Filtrierbarkeit und die hohe Einheitlichkeit des Polymeren ändern. Unbefriedigend sind jedoch verschiedene für die Verarbeitung des Polymeren wichtige Eigenschaften, z. B. Festigkeit und Klebrigkeit.

Schließlich ist noch ein Verfahren zur Herstellung von Polyvinylacetalen bekannt, bei dem ein Polyvinylalkohol mit einem Aldehyd in wäßriger Phase in Anwesenheit eines sauren Katalysators kondensiert wird (vgl. deutsche Offenlegungsschrift 2 365 005). Dabei wird das Reaktionsgemisch bei einer Temperatur von höchstens 20° C gehalten, damit das Reaktionsprodukt ausfällt, und anschließend wird die Reaktion bei einer Temperatur von mindestens 30° C weitergeführt.

Die genannten Verfahren haben miteinander gemeinsam, daß die Reaktion abgebrochen wird, wenn der gewünschte Acetalisierungsgrad erreicht ist. Dabei wird häufig auch in Kauf genommen, daß das Acetalisierungsgleichgewicht noch nicht erreicht ist, d. h., man arbeitet mit einem Überschuß an Butyraldehyd und bricht die Reaktion vor Erreichen des Acetalisierungsgleichgewichts ab.

Aus der deutschen Offenlegungsschrift 1 545 141 ist noch die Herstellung von Polyvinylbutyral durch Acetalisierung von Polyvinylalkohol mit Butyraldehyd in Gegenwart eines Alkylsulfonats als Suspensionsstabilisator bekannt. Dabei erfolgt die Hauptumsetzung bei 60° C, und während der anschließenden Rührbehandlung, wobei die Acetalisierung fortgesetzt wird, wir das Produkt auf Raumtemperatur gebracht; die Sulfonsäure wird beispielsweise in einer Menge von etwa 4 Prozent eingesetzt, und die danach erhaltenen Produkte zeigen einen Vinylalkoholgehalt von 16,3 bzw. 22,0 Prozent.

Die Erfindung betrifft nun ein Verfahren zur Herstellung von Polyvinylbutyral mit verbesserten Eigenschaften und ist dadurch gekennzeichnet, daß ein Polyvinylbutyral, dessen 5gewichtsprozentige Lösung in Äthanol bei 23° C (gemessen nach DIN 53 015) eine Viskosität von 10 bis 200 mPa · s aufweist und das einen Gehalt von 17 bis 24 Gewichtsprozent Vinylalkoholeinheiten hat und zu über 90 Prozent in einer Korngröße unter 1 mm vorliegt, in wäßriger Phase bei einer Temperatur von 50 bis 70° C in Gegenwart von 0,01 bis 0,5 Gewichtsprozent, bezogen auf das Polyvinylbutyral, einer emulgierend wirkenden organischen Sulfonsäure mit 8 bis 30 Kohlenstoffatomen oder eines Salzes einer solchen Sulfonsäure 0,5 bis 10 Stunden lang unter an sich bekannten Acetalisierungsbedingungen nachbehandelt und dann in üblicher Weise abgetrennt wird.

Das erfindungsgemäß erhaltene Polyvinylbutyral ist durch erheblich erhöhte Festigkeit und Steifigkeit ausgezeichnet und zeigt gleichzeitig eine verringerte Löslichkeit.

Für das erfindungsgemäße Verfahren kommt es grundsätzlich nicht darauf an, nach welchem Verfahren das eingesetzte Polyvinylbutyral hergestellt worden ist. Da die Nachbehandlung aber in wäßriger Phase erfolgt, ist es vorteilhaft, Polyvinylbutyrale zu verwenden, die ebenfalls in wäßriger Phase hergestellt wurden. Hierbei ist es besonders zweckmäßig, an die Acetalisierung sofort ohne Unterbrechung die Nachbehandlung anzuschließen, so daß Acetalisierung und Nachbehandlung in einem einzigen Arbeitsgang ohne Abtrennung der Acetalisierungsflotte durchgeführt werden und anschließend das Reaktionsprodukt in an sich bekannter Weise abgetrennt wird. Selbstverständlich kann aber auch trockenes Polyvinylbutyralpulver der erfindungsgemäßen Nachbehandlung unterworfen werden.

Besonders vorteilhaft ist die Nachbehandlung eines in wäßriger Phase hergestellten Polyvinylbutyrals, bei dessen Herstellung die Reaktionstemperatur bis zum Ablauf der Acetalisierung unter 20° C gelegen hat. In diesem Fall wird das Polyvinylbutyral nämlich in einer Korngröße (Partikeldurchmesser) gewonnen, die zu über 90% unter 1 Millimeter, größtenteils sogar unter 0,5 Millimeter liegt und die deshalb für die Nachbehandlung besonders geeignet ist. Bei gröberen Polyvinylbutyralen empfiehlt sich das Mahlen auf die angegebene Korngröße vor der Nachbehandlung.

Die Verbesserung der mechanischen Eigenschaften hängt nur wenig vom Molekulargewicht des eingesetzten Polyvinylbutyrals ab. Man kann daher Polyvinylbutyrale in einem so weiten Molekulargewichtsbereich, wie er für die Praxis interessant ist, der erfindungsgemäßen Nachbehandlung unterziehen. In diesem Bereich liegen im allgemeinen Polyvinylbutyrale, deren 5gewichtsprozentige Lösung in Äthanol bei 23° C eine Viskosität von 10 bis 200 mPa · s, vorzugsweise von 50 bis 100 mPa · s (gemessen nach DIN 53 015), aufweist.

Von besonderer Bedeutung für den Erfolg des erfindungsgemäßen Verfahrens ist nun aber die chemische Zusammensetzung des Polyvinylbutyrals. Grundsätzlich lassen sich die mechanischen Eigenschaften leichter in Polyvinylbutyralen mit einem hohen Gehalt an Vinylalkoholeinheiten verbessern als bei einem niedrigen Gehalt an Vinylalkoholeinheiten. Liegt der Anteil an Vinylalkoholeinheiten unter 17 Gewichtsprozent, so kann eine deutliche Verbesserung der mechanischen Eigenschaften nicht mehr beobachtet werden. Liegt jedoch der Anteil über 24 Gewichtsprozent, so erhält man durch die Nachbehandlung ein Polyvinylbutyral, welches sich nicht mehr ausreichend verarbeiten läßt. Deshalb wird ein Gehalt von 17 bis 24 Gewichtsprozent Vinylalkoholeinheiten, vorzugsweise ein Gehalt von 18 bis 23 Gewichtsprozent Vinylalkoholeinheiten, verwendet.

Die mechanischen Eigenschaften des Reaktionsproduktes werden auch stark durch die bei der Nachbehandlung angewendete Temperatur beeinflußt. Temperaturen unter 50° C sind nicht zu empfehlen, weil die Reaktion dann zu lange dauert. Oberhalb 65° C, bei hochmolekularen Polyvinylbutyralen oberhalb 70° C, neigt das Polymere zur Vergrößerung der Kornbeschaffenheit und zur Klumpenbildung. Deshalb wird im allgemeinen bei 50 bis 70° C, vorzugsweise bei 50 bis 65° C, gearbeitet.

Die Dauer der Nachbehandlung beträgt im allgemeinen zwischen 0,5 und 10 Stunden, vorzugsweise zwischen 1 und 7 Stunden.

Eine besonders wichtige Voraussetzung für die Eigenschaftsverbesserung des Polyvinylbutyrals durch die erfindungsgemäße Nachbehandlung ist die Anwesenheit von 0,01 bis 0,5, vorzugsweise 0,05 bis 0,2 Gewichtsprozent, bezogen auf das Polyvinylbutyral, einer emulgierend wirkenden organischen Sulfonsäure mit 8 bis 30 Kohlenstoffatomen. Geeignet sind hierfür Alkyl- und Alkylarylsulfonsäuren, beispielsweise Dodecylbenzolsulfonsäure oder Hexadecansulfonsäure. Es ist auch möglich, Gemische dieser Säure zu verwenden. Der aliphatische Rest der Sulfonsäure kann dabei verzweigt und der aromatische Rest kann auch durch eine oder mehrere Alkylgruppen substituiert sein.

Die Nachbehandlung findet im übrigen in wäßriger Phase unter üblichen Acetalisierungsbedingungen statt, wobei 1 bis 100 Gewichtsteile Wasser pro Gewichtsteil Polymeres und etwa 0,1 bis 5 Gewichtsprozent einer anorganischen Säure, bezogen auf die wäßrige Phase, eingesetzt werden. Hierbei wird das Reaktionssystem durch Rühren in Bewegung gehalten. Als anorganische Säure verwendet man vorzugsweise Schwefelsäure oder Salzsäure. Außerdem empfiehlt es sich, zur Aufrechterhaltung des bestehenden Acetalisierungsgrades im Polymeren eine der Gleichgewichtskonzentration ungefähr entsprechende Menge an n-Butyraldehyd zuzusetzen, wofür je nach Reaktionsbedingungen 0,1 bis 5 Gewichtsprozent, bezogen auf das Polymere, ausreichen. Die Konzentration an n-Butyraldehyd ist dabei so zu wählen, daß der Anteil an Vinylalkoholeinheiten auch im nachbehandelten Polymeren zwischen 17 und 24, vorzugsweise zwischen 18 und 23 Gewichtsprozent liegt.

Durch den beschriebenen Zusatz eines Überschusses an anorganischer Säure ist es nicht unbedingt erforderlich, die emulgierend wirkende organische Sulfonsäure als freie Säure einzusetzen. Vielmehr können auch beliebige Salze dieser Sulfonsäuren verwendet werden, aus denen die freie Säure im Reaktionsgemisch entsteht.

Die erfindungsgemäße Nachbehandlung des Polyvinylbutyrals wird durch die Abtrennung des Endproduktes beendet. Dabei wird ebenso vorgegangen, wie es bei der Herstellung von Polyvinylbutyralen aus wäßriger Phase bekannt ist. Die Aufarbeitung besteht dabei in der vollständigen Entfernung der Säure aus dem Polymeren, vorzugsweise durch eine intensive Wäsche mit Wasser. Nach bekannten Methoden empfiehlt es sich, vor der anschließenden Trocknung eine geringe Menge Alkali auf das Polymere aufzubringen, so daß beispielsweise zur Neutralisierung von 100 Gramm Polyvinylbutyral 5 bis 100 Milliliter 0,01 normale HCl-Lösung erforderlich sind.

Es ist ein besonderer Vorteil des Verfahrens, daß man durch Variation der verschiedenen Verfahrensmerkmale die Eigenschaften des Endproduktes graduell und reproduzierbar beeinflussen kann. Das ist besonders wichtig, weil die als Ausgangsprodukt eingesetzten Polyvinylbutyrale sich in Abhängigkeit von ihren Herstellungsbedingungen strukturell unterscheiden können. Polyvinylbutyrale, die z. B. bei tiefer Temperatur hergestellt wurden, sind in der Regel mehr statistisch aufgebaut als Polyvinylbutyrale, die bei höheren Temperaturen erhalten wurden. Aus ersteren kann so durch eine intensive Nachbehandlung ein Endprodukt gleicher Qualität erhalten werden wie aus letzteren, die durch die Bedingungen der Nachbehandlung nicht so stark verändert werden.

In welcher Weise durch Veränderung von Verfahrensparametern die Eigenschaften des Polyvinylbutyrals während der erfindungsgemäßen Nachbehandlung beeinflußt werden, kann auf einfache Weise z. B. durch die Bestimmung der Viskosität einer 5prozentigen äthanolischen Lösung bei 23°C nach DIN 53 015 und die Verfolgung der Viskositätsänderung bei dieser Temperatur festgestellt werden.

Hierzu wird das Polyvinylbutyral bei 70°C gelöst. Anschließend wird die Lösung innerhalb von 5 Minuten auf die Meßtemperatur abgekühlt und sofort die Viskosität bestimmt. In bestimmten Zeitabständen, z. B. jeweils nach einer Stunde, nach einem Tag und/oder nach einer Woche, wird die Viskosität bei 23°C erneut ermittelt. Nicht nachbehandelte Polymere mit einem Anteil an Vinylalkoholeinheiten unter 23 Gewichtsprozent ändern ihre Viskosität bei dieser Behandlung praktisch nicht. Polyvinylbutyrale, die nur kurze Zeit nachbehandelt wurden, verdicken in Lösung nur weng, während Polyvinylbutyrale nach mehrstündiger Nachbehandlung unter verschärften Bedingungen, z. B. bei Temperaturen oberhalb 65°C und in Gegenwart von mehr als 0,2 Gewichtsprozent Alkansulfonsäure, schon innerhalb einer Stunde in Lösung gelieren können.

Die Eigenschaftsveränderungen des Polyvinylbutyrals können aber prinzipiell auch durch Messung aller anderen Eigenschaften verfolgt werden, die sich durch die Nachbehandlung ändern.

Die durch das erfindungsgemäße Verfahren erzielten Eigenschaftsänderungen des Polyvinylbutyrals sind sehr auffällig. Insbesondere werden die Festigkeit und die Steifigkeit des Polymeren erheblich erhöht. Weich gemachte Folien, die aus dem erfindungsgemäß behandelten Polyvinylbutyral hergestellt werden, zeigen gegenüber bekannten Polyvinylbutyralfolien eine wesentlich erhöhte Steifigkeit, eine erheblich erhöhte Festigkeit bei definierter Dehnung und eine erhöhte Reißfestigkeit bei nur wenig erniedrigter Reißdehnung. Bei Temperaturen unter 100°C neigen die aus dem erfindungsgemäß hergestellten Polyvinylbutyral angefertigte Folien wesentlich weniger zum Fließen, was ihre Verwendung als Verbundfolien für Sicherheitsglas erleichtert. Außerdem wird durch die erfindungsgemäße Nachbehandlung überraschenderweise auch die unerwünschte Klebrigkeit der Polyvinylbutyralfolien stark herabgesetzt. Bei Verwendung von Polyvinylbutyral mit einer hierfür geeigneten Molekulargewichtsverteilung wird gleichzeitig die Fließfähigkeit und die Verarbeitbarkeit gegenüber bekanntem Polyvinylbutyral in keiner Weise beeinträchtigt. Trotz der durch die Nachbehandlung hervorgerufenen geringeren Löslichkeit des Polyvinylbutyrals in einigen Lösungsmitteln ist es zusammen mit üblichen Weichmachern hervorragend verträglich und ergibt Folien mit hoher Klarheit.

Die Verarbeitung des durch die erfindungsgemäße Nachbehandlung erhaltenen Polyvinylbutyrals zu Verbundfolien erfolgt in üblicher Weise. Da die Fließfähigkeit in der weichmacherhaltigen Schmelze durch die Nachbehandlung verringert wird, empfiehlt es sich, Polymere mit einem Molekulargewicht — ausgedrückt durch die Viskosität in 5prozentiger äthanolischer Lösung bei 23°C nach DIN 53 015 — einzusetzen, das im allgemeinen niedriger liegt als bei den üblicherweise zu diesem Zweck verwendeten Polyvinylbutyralen. Zur weiteren Verbesserung der Fließfähikgeit können auch Polyvinylbutyrale mit niedrigerem Molekulargewicht zugesetzt werden. Schließlich kann die Verarbeitbarkeit des erfindungsgemäß hergestellten Polyvinylbutyrals auch durch Variation des zugesetzten Weichmachers beeinflußt werden.

Die Menge des zuzusetzenden Weichmachers beträgt im allgemeinen 20 bis 60 Gewichtsteile, insbesondere 30 bis 50 Gewichtsteile auf 100 Gewichtsteile Polyvinylbutyral. Als Weichmacher dienen die üblicherweise verwendeten Verbindungen, z. B. Ester von mehrwertigen Alkoholen oder von mehrwertigen Säuren. Beispielsweise sind Ester des Triäthylenglykols mit aliphatischen Carbonsäuren mit 6 bis 10 Kohlenstoffatomen wie insbesondere 2-Äthylbuttersäure, Glycerinmonooleat, Dibutylsebacat, Di($\beta$-butoxymethyl)-adipat, Dioctylphthalat und Tricresylphosphat geeignet. Diese Weichmacher können einzeln oder in Gemischen verwendet werden.

Ferner können Substanzen zugesetzt werden, die die Mischung gegen Abbau stabilisieren, z. B. geringe Mengen an Alkali oder an alkalisch reagierenden Salzen, ferner Oxidationsstabilisatoren wie die in 2-, 4- und/oder 6-Stellung substituierten Phenole, Bisphenole oder Terpenphenole.

Schließlich können die Mischungen noch Zusätze enthalten, die die Haftung der Folien aneinander oder an Glas beeinflussen, z. B. Salze von Carbonsäuren, Fluoride, Lecithin oder Alkylenharnstoffe.

Sowohl die genannten Stabilisatoren als auch die Zusätze zum Beeinflussen der Haftung werden üblicherweise in Mengen von 0,001 bis 1 Gewichtsprozent, bezogen auf die Gesamtmischung, zugesetzt. Polyvinylbutyral, Weichmacher und gegebenenfalls Zusätze werden in bekannter Weise durch Zusammenrühren bei Normaltemperatur und gegebenenfalls Stehenlassen der Mischung oder durch Verkneten oder Verwalzen bei erhöhter Temperatur oder auch unmittelbar bei der Verarbeitung auf dem Kalander oder im Estruder gemischt.

Die Herstellung von Glasverbunden aus Verbundfolien, die erfindungsgemäß behandeltes Polyvinylbutyral enthalten, kann nach den üblichen Methoden, beispielsweise durch Verpressen zwischen 2 Glasscheiben bei 120 bis 160°C und 5 bis 20 bar erfolgen. Von Vorteil ist bei der Herstellung der Verbunde aus erfindungsgemäß hergestelltem Polyvinylbutyral vor allem die geringe Klebrigkeit und die bei Temperaturen unter 100°C verringerte Fließfähigkeit der Folien, was vor allem das Einlegen der Folien zwischen gewölbte Glasscheiben erleichtert und auch zur Verminderung von Lufteinschlüssen im Verbund beiträgt.

Darüber hinaus eignen sich die so hergestellten Polyvinylbutyrale auch für alle anderen Anwendungen des Polyvinylbutyrals, beispielsweise als Zusatz zu Lacken und Grundierungen.

**0 000 699**

### Beispiel 1

270 g eines Polyvinylbutyrals, dessen Teilchengröße zu 94% unter 0,5 mm lag und das einen Gehalt an Vinylalkoholeinheiten von 20,0 Gewichtsprozent und dessen 5prozentige äthanolische Lösung bei 23°C eine Viskosität von 68 mPa · s hatte, wurden in 2530 g Wasser, 1 g n-Butyraldehyd, 0,28 g Hexadecansulfonsäure und 170 ml konzentrierter Salzsäure fünf Stunden bei 60°C gerührt. Zur Aufarbeitung wurde das Polymere abgesaugt, mit Wasser neutral gewaschen, mit 2 l Wasser und 7 g 10prozentiger Natronlauge eine Stunde bei 60°C gerührt, abgesaugt und bei 40°C im Vakuum getrocknet.

Anschließend wurde das Polymere mit 29 Gewichtsprozent Triäthylenglycol-bis(2-äthylbuttersäureester) vermischt und bei 170°C extrudiert. Von dem Extrudat wurden 0,8 mm starke Folien gepreßt. Die folgende Tabelle zeigt verschiedene Eigenschaften dieser Folien im Vergleich zu Folien aus dem unbehandelten Ausgangspolymeren.

| Polymeres | Anteil an Vinylalkohol-einheiten (Gew.-%) | Schmelzindex $i_{10}$ 150°C*)/$i_{20}$ 60°C**) (g/10 min)/(mg/h) | Reiß-festigkeit***) (N/cm$^2$) | Reiß-dehnung***) | Festigkeit bei 100% Dehnung***) (N/cm$^2$) |
|---|---|---|---|---|---|
| Unbehandelt (Vergleich) | 20,0 | 4,62/134 | 2250 | 325 | 160 |
| Behandelt | 20,4 | 0,82/0 | 2750 | 300 | 450 |

\*) Bestimmung nach DIN 53 735 bei 150°C unter 10 kg Last.
\*\*) Bestimmung des Ausstoßes in mg/h bei 60°C unter 21,6 kg Last, Apparatur wie bei $i_{10}$ 150°C.
\*\*\*) Bestimmung nach DIN 53 455 nach Klimatisierung bei 23°C und 50% rel. Luftfeuchte, Zuggeschwindigkeit 20 cm/min, Einspannlänge 50 mm, Breite der Meßstreifen 15 mm.

### Beispiel 2

Wie in Beispiel 1 beschrieben, wurde ein feinteiliges Polyvinylbutyral mit einem Anteil an Vinylalkoholeinheiten von 19,5 Gewichtsprozent, dessen 5prozentige Lösung bei 23°C eine Viskosität von 64 mPa · s hatte, in der 10fachen Menge Wasser 3 Stunden bei 62°C gerührt. Hierbei enthielt die wäßrige Phase 2% Schwefelsäure und 0,1% n-Butyraldehyd. Außerdem wurden dem Ansatz 0,2% (bezogen auf das Polymere) eines Natriumsalzes von $C_{13}-C_{18}$-Alkansulfonsäuren zugesetzt. Nach dieser Behandlung wurde das Polymere wie in Beispiel 1 angegeben aufgearbeitet und zu einer weichmacherhaltigen Folie extrudiert.

Die Eigenschaftsänderungen des Polymeren sind aus der folgenden Tabelle zu entnehmen.

| Polymeres | Anteil an Vinylalkohol-einheiten (Gew.-%) | Schmelzindex $i_{10}$ 150°C/$i_{20}$ 60°C (g/10 min)/(mg/h) | Reiß-festigkeit*) (N/cm$^2$) | Blocken**) (s) |
|---|---|---|---|---|
| Unbehandelt (Vergleich) | 19,5 | 7,15/175 | 1900 | 7000 |
| Behandelt | 20,7 | 2,00/0 | 2800 | 1200 |

\*) Siehe Beispiel 1.
\*\*) Die Bestimmung der Folienklebrigkeit, in der Tabelle als Blocken bezeichnet, wurde wie folgt vorgenommen: Folienstreifen von $15 \times 100$ mm mit definiert aufgerauhter Oberfläche wurden nach Klimatisierung bei 23°C und 50% rel. Luftfeuchte auf 5 cm Länge aufeinandergelegt und 16 Stunden mit 1 N/cm$^2$ belastet. Anschließend wurden die Streifen im Normklima aufgehängt und mit einem 200-g-Gewicht auseinandergezogen. Es wurde die Zeit in Sekunden ermittelt, bis sich die Folienstreifen voneinander gelöst hatten.

Von den aus dem nachbehandelten Polymeren hergestellten Folien konnten nach bekannten Methoden Glasverbunde mit hoher Schlagfestigkeit und hervorragender Transparenz hergestellt werden.

5

## Beispiel 3

Jeweils 100 Teile eines Polyvinylbutyrals mit einem Anteil von Teilchen unter 1 mm Durchmesser von 93% und mit einem Gehalt Vinylalkoholeinheiten von 21,5 Gew.-% wurden in 900 Teilen 2,5prozentiger Salzsäure, 2 Teilen n-Butyraldehyd und 0,2 Teilen Dodecylbenzolsulfonsäure jeweils 6 Stunden lang bei den in der Tabelle angegebenen Temperaturen gerührt und anschließend wie in Beispiel 1 angegeben aufgearbeitet.

Von den Polymeren, deren Kornbeschaffenheit unverändert geblieben war, wurden jeweils 5prozentige Lösungen in Äthanol bei 70°C hergestellt. Nach Abkühlen auf 23°C wurde die Viskosität der Lösungen nach DIN 53 015 bestimmt. Die Ergebnisse sind aus der Tabelle zu ersehen.

| Behandlungstemperatur (°C) | Viskosität 5% in Äthanol bei 23°C (mPa · s) | |
|---|---|---|
| | nach 5 min | nach 24 Stunden |
| 51 | 60 | 66 |
| 55 | 63 | 72 |
| 60 | 68 | 98 |
| 64 | 80 | 174 |

Demgegenüber hatte das unbehandelte Polymere 5 Minuten nach Abkühlen eine Viskosität von 55 mPa · s und 24 Stunden nach Abkühlen von 56 mPa · s.

## Beispiel 4

Ein Polymeres mit den in folgender Tabelle angegebenen Eigenschaften wurde wie in Beispiel 3 angegeben behandelt, mit dem Unterschied, daß 0,4 Gewichtsprozent Dodecylbenzolsulfonsäure anwesend waren (bezogen auf das Polymere). Die Reaktionstemperatur lag bei 65°C. Die Aufarbeitung erfolgte wie in Beispiel 1 angegeben.

| Polymeres | Anteil an Vinyl-alkoholeinheiten (Gew.-%) | Viskosität 5% in Äthanol bei 23°C | | Schmelzindex (ohne Weich-macher $i_{10}$190°C (g/10 min) |
|---|---|---|---|---|
| | | nach 5 min | nach 24 Std. (mPa · s) | |
| Unbehandelt (Vergleich) | 22,5 | 24 | 24 | oberhalb 50*) |
| Behandelt | 22,7 | 215 | oberhalb 15 000 | 5,2 |

*) Nicht genauer meßbar.

## Beispiel 5

In bekannter Weise wurden 1000 Teile einer 10%igen Lösung von Polyvinylalkohol (Polymerisationsgrad ca. 1200) in Gegenwart von 65 Teilen konzentrierter Salzsäure bei 15°C mit n-Butyraldehyd umgesetzt. Dabei wurden unter Rühren zunächst 15 Teile Butyraldehyd vorgelegt und anschließend in 10 Minuten weitere 42 Teile Butyraldehyd zugegeben. Das entstehende Polyvinylbutyral fiel dabei feinteilig aus. Nun wurde der Ansatz unter Rühren mit einer Geschwindigkeit von 15°C/Stunde auf 40°C erwärmt und bei dieser Temperatur 4 Stunden gehalten. Anschließend wurde der Ansatz geteilt. Eine Hälfte wurde wie in Beispiel 1 angegeben aufgearbeitet (Vergleichsversuch).

Die andere Hälfte des Ansatzes wurde mit 0,15 Teilen einer $C_{13}$—$C_{18}$-Alkansulfonsäure in 5 Teilen Wasser versetzt und in 10 Minuten auf 62°C erhitzt. Nach jeweils 1,3 und 5 Stunden Reaktion bei 62°C wurden Proben abgenommen, nach 7 Stunden wurde die Reaktion abgebrochen. Alle Proben und der Rest des Ansatzes wurden wie in Beispiel 1 angegeben aufgearbeitet.

Verschiedene Eigenschaften der Polymeren sind in der folgenden Tabelle zusammengefaßt.

6

**0 000 699**

| Reaktionsdauer bei 62°C (Stunden) | Anteil an Vinylalkoholeinheiten (Gew.-%) | Viskosität 5% in Äthanol, 23°C | | Eigenschaften einer 0,76-mm-Folie (29% Weichmachergehalt) *) | | |
|---|---|---|---|---|---|---|
| | | nach 5 min (m Pa · s) | nach 24 Std. (mPa · s) | Schmelzindex $i_{10}$ 150°C (g/10 min) | Blocken**) (s) | Dehnung unter***) 37 N/cm$^2$ Last nach 100 min (%) |
| – (Vergleich) | 21,6 | 54 | 55 | 7,21 | 5000 | 127 |
| 1 | 21,4 | 55 | 59 | 6,56 | 1600 | 41 |
| 3 | 21,2 | 59 | 68 | 2,74 | 1300 | 32 |
| 5 | 21,0 | 70 | 83 | 1,26 | 950 | 26 |
| 7 | 20,9 | 83 | 120 | 0,52 | 550 | 25 |

*) Triäthylenglycol-bis-ester eines $C_6$–$C_9$-Fettsäuregemischs.
**) Siehe Beispiel 2.
***) Die Messung erfolgte an $15 \times 100$-mm-Folienstreifen, an die ein entsprechendes Gewicht gehängt wurde. Sie demonstriert die Zunahme der Steifigkeit der Folie durch die erfindungsgemäße Nachbehandlung.

## Beispiel 6

Ein nach dem Stand der Technik wie in Beispiel 5 angegeben hergestelltes Polymeres mit einem Anteil an Vinylalkoholeinheiten von 19,7 Gewichtsprozent und einer Korngröße, die zu 96% unter 0,5 mm lag, wobei die 5prozentige äthanolische Lösung eine Viskosität von 81 mPa · s hatte, wurde jeweils in Gegenwart der achtfachen Menge an 1,8prozentiger Salzsäure und in Gegenwart von 2,5%, bezogen auf das Polymere, n-Butyraldehyd 7 Stunden bei 55° C gerührt. Dabei wurde in verschiedenen Ansätzen jeweils die in der folgenden Tabelle angegebene Menge Dodecylbenzolsulfonsäure zugegeben. Die Änderung einiger Eigenschaften ist in der Tabelle im Vergleich zu dem unbehandelten Ausgangsprodukt angegeben.

| Polymeres | Zusatz Dodecylbenzolsulfonsäure (%, bezogen auf Polymer) | Anteil an Vinylalkoholeinheiten (Gew.-%) | Eigenschaften einer 0,76-mm-Folie (29% Weichmachergehalt) *) | |
|---|---|---|---|---|
| | | | Schmelzindex $i_{20}$ 60°C (mg/Std.) | Festigkeit bei 100% Dehnung (Bsp. 1) (N/cm$^2$) |
| Unbehandelt (Vergleich) | – | 19,7 | 175 | 15 |
| Behandelt | 0,05 | 19,5 | 10 | 28 |
| Behandelt | 0,1 | 19,7 | 4 | 32 |
| Behandelt | 0,3 | 19,3 | 0 | 35 |

*) Triäthylenglycol-bis(2-äthylbuttersäureester).

## Beispiel 7

In ähnlicher Weise, wie in Beispiel 5 beschrieben, wurden verschiedene Polyvinylbutyrale hergestellt und in einem Arbeitsgang durch das erfindungsgemäße Verfahren nachbehandelt.

Dabei wurden jeweils 1250 Teile einer 8prozentigen Lösung von Polyvinylalkohol zusammen mit 85 Teilen konzentrierter Salzsäure und 15 Teilen n-Butyraldehyd auf 13° C abgekühlt. Außerdem enthielten die Ansätze 0,3 Teile Octadecansulfonsäure. Nun wurden bei 13° C bei drei verschiedenen

7

0 000 699

Ansätzen 40 Teile, bzw. 44 Teile, bzw. 48 Teile n-Butyraldehyd in 30 Minuten zugetropft. Anschließend wurden die Ansätze in 2 Stunden mit gleichbleibender Geschwindigkeit auf 63°C erhitzt und 5 Stunden bei dieser Temperatur gehalten. Schon beim Erreichen einer Temperatur von 55°C war der gewünschte Bereich des Acetalisierungsgrades erreicht. Bei einem der Ansätze wurde zu diesem Zeitpunkt eine Probe entnommen, die erwartungsgemäß die Eigenschaften eines Polymeren gemäß dem Stand der Technik hatte.

Bei den erfindungsgemäß länger behandelten Polymeren trat dagegen eine Verstärkung der zwischenmolekularen Kräfte ein, wie aus folgender Tabelle zu erkennen ist.

| Polymeres | Anteil an Vinylalkohol- einheiten (Gew.-%) | Viskosität 5% in Äthanol 23°C | | Eigenschaften einer 0,76-mm-Folie (29% Weichmachergehalt)*) | |
|---|---|---|---|---|---|
| | | nach 5 min (mPa · s) | nach 24 Std. (mPa · s) | Reißfestigkeit (N/cm$^2$) | Blocken (s) |
| 1 nachbehandelt | 18,9 | 53 | 62 | 250 | 1800 |
| 2 nachbehandelt | 20,2 | 61 | 91 | 275 | 900 |
| 2 Vergleich | 19,2 | 52 | 52 | 210 | 7500 |
| 3 nachbehandelt | 22,2 | 69 | 109 | 280 | 420 |

*) Triäthylenglycol-bis(2-äthylbuttersäureester).

## Patentansprüche

1. Verfahren zur Herstellung von Polyvinylbutyral mit verbesserten Eigenschaften, dadurch gekennzeichnet, daß ein Polyvinylbutyral, dessen 5gewichtsprozentige Lösung in Äthanol bei 23°C (gemessen nach DIN 53 015) eine Viskosität von 10 bis 200 mPa · s aufweist und das einen Gehalt von 17 bis 24 Gewichtsprozent Vinylalkoholeinheiten hat und zu über 90 Prozent in einer Korngröße unter 1 mm vorliegt, in wäßriger Phase bei einer Temperatur von 50 bis 70°C in Gegenwart von 0,01 bis 0,5 Gewichtsprozent (bezogen auf das Polyvinylbutyral) einer emulgierend wirkenden organischen Sulfonsäure mit 8 bis 30 Kohlenstoffatomen oder eines Salzes einer solchen Sulfonsäure 0,5 bis 10 Stunden lang unter an sich bekannten Acetalisierungsbedingungen nachbehandelt und dann in üblicher Weise abgetrennt wird.

2. Verfahren nach Anspruch 1, dadurch gekennzeichnet, daß ein Polyvinylbutyral eingesetzt wird, dessen 5gewichtsprozentige Lösung in Äthanol bei 23°C (gemessen nach DIN 53 015) eine Viskosität von 50 bis 100 mPa · s aufweist.

3. Verfahren nach Anspruch 1, dadurch gekennzeichnet, daß ein Polyvinylbutyral mit einem Gehalt an 18 bis 23 Gewichtsprozent Vinylalkoholeinheiten eingesetzt wird.

4. Verfahren nach Anspruch 1, dadurch gekennzeichnet, daß das Polyvinylbutyral in wäßriger Phase auf 50 bis 65°C erwärmt wird.

5. Verfahren nach Anspruch 1, dadurch gekennzeichnet, daß das Polyvinylbutyral 1 bis 7 Stunden nachbehandelt wird.

6. Verfahren nach Anspruch 1, dadurch gekennzeichnet, daß die emulgierend wirkende organische Sulfonsäure in einer Menge von 0,05 bis 0,2 Gewichtsprozent, bezogen auf das Polyvinylbutyral, eingesetzt wird.

7. Verfahren nach Anspruch 1, dadurch gekennzeichnet, daß das Polyvinylbutyral unmttelbar nach seiner Herstellung ohne Abtrennung von der Acetalisierungsflotte im gleichen wäßrigen Reaktionsmedium einer Nachbehandlung unterworfen und das Polymere anschließend in üblicher Weise abgetrennt wird.

## Claims

1. Process for the preparation of a polyvinylbutyral having improved properties, which comprises subjecting a polyvinylbutyral, the 5% by weight solution of which in ethanol at 23°C has a viscosity of from 10 to 200 mPa · s (measured according to DIN 53 015) and which has a content of from 17 to 24% by weight of vinyl alcohol units and is present at more than 90% with particles having a size of less than 1 mm, in an aqueous medium at a temperature of from 50 to 70°C in the presence of from 0.01 to 0.5% by weight, calculated on the polyvinylbutyral, of an organic sulfonic acid having from 8 to 30 carbon atoms and being effective as emulsifier or of a salt of such sulfonic acid to an aftertreatment for a period of from 0.5 to 10 hours under acetalization conditions known per se and thereafter separating said polyvinylbutyral as usual.

2. The process of claim 1, which comprises using a polyvinylbutyral the 5% by weight solution of which in ethanol at 23°C has a viscosity of from 50 to 100 mPa · s (measured according to DIN 53 015).

3. The process of claim 1, which comprises using a polyvinylbutyral having a content of from 18 to 23% by weight of vinyl alcohol units.

4. The process of claim 1, which comprises heating the polyvinylbutyral in an aqueous medium to 50 to 65°C.

5. The process of claim 1, which comprises subjecting the polyvinylbutyral to an after-treatment for a period of from 1 to 7 hours.

6. The process of claim 1, which comprises using the organic sulfonic acid in an amount of from 0.05 to 0.2% by weight, calculated on the polyvinylbutyral.

7. The process of claim 1, which comprises subjecting the polyvinylbutyral immediately after its preparation without separation from the acetalization liquor to an after-treatment in the same aqueous reaction medium and separating the polymer subsequently as usual.

## Revendications

1. Procédé de préparation d'un polyvinylbutyral doué de propriétés améliorées, procédé caractérisé en ce qu'on soumet un polyvinylbutyral dont la solution à 5% en poids dans l'éthanol à 23°C (mesurée selon DIN 53 015) a une viscosité de 10 à 200 mPa · s, qui a une teneur en motifs d'alcool vinylique de 17 à 24% en poids et qui est pour plus de 90% sous la forme de grains de taille inférieure à 1 mm, a un traitement complémentaire dans des conditions d'acétalisation connues, en phase aqueuse, à une température de 50 à 70°C, en présence de 0,01 à 0,5% en poids, par rapport au polyvinylbutyral, d'un acide sulfonique organique en $C_8$—$C_{30}$ à action émulsionnante ou d'un sel d'un tel acide sulfonique, pendant une durée de 0,5 à 10 heures, puis on sépare le polyvinylbutyral de façon connue.

2. Procédé selon la revendication 1, caractérisé en ce qu'on utilise un polyvinylbutyral dont la solution à 5% en poids dans de l'éthanol, à 23°C, a une viscosité de 50 à 100 mPa · s (mesurée selon la norme DIN 53 015).

3. Procédé selon la revendication 1, caractérisé en ce qu'on utilisie un polyvinylbutyral ayant une teneur en motifs d'alcool vinylique comprise entre 18 et 23% en poids.

4. Procédé selon la revendication 1, caractérisé en ce qu'on chauffe le polyvinylbutyral en phase aqueuse à une température comprise entre 50 et 65°C.

5. Procédé selon la revendication 1, caractérisé en ce que le traitement complémentaire auquel on soumet le polyvinylbutyral dure de 1 à 7 heures.

6. Procédé selon la revendication 1, caractérisé en ce qu'on utilise l'acide sulfonique organique à action émulsionnante en une quantité de 0,05 à 0,2% en poids par rapport au polyvinylbutyral.

7. Procédé selon la revendication 1, caractérisé en ce qu'on soumet le polyvinylbutyral, aussitôt après sa préparation, sans séparer le bain d'acétalisation, dans le même milieu réactionnel aqueux, à un traitement complémentaire et on sépare ensuite le polymère de la manière habituelle.